# EUROPEAN PATENT SPECIFICATION

(11) **EP 2 811 828 B1**
(45) Date of publication and mention of the grant of the patent: **01.09.2021**
(21) Application number: 13701413.0
(22) Date of filing: 18.01.2013
(51) Int. Cl.: A01N 25/02, A01N 25/04, A01N 25/30, A01N 37/42, A01N 43/40, A01N 43/54, A01N 43/90, A01N 45/02, A01N 51/00, A01P 3/00, A01P 13/00, A01P 21/00, A01P 7/04

(54) **ADJUVANT COMPOSITIONS**
HILFSSTOFFZUSAMMENSETZUNGEN
COMPOSITION D'ADJUVANTS

(30) Priority: 23.01.2012 US 201261589864 P
(43) Date of publication of application: 17.12.2014
(73) Proprietor: Syngenta Participations AG, 4058 Basel (CH); Syngenta Limited, Bracknell, Berkshire RG42 6EY (GB)
(72) Inventor: STOCK, David, Bracknell Berkshire RG42 6EY (GB); TAYLOR, Philip, Bracknell Berkshire RG42 6EY (GB); RAMSAY, Julia, Lynne, Bracknell Berkshire RG42 6EY (GB); BELL, Gordon, Alastair, Bracknell Berkshire RG42 6EY (GB); ASHFORD, Emma, Jane, CH-4058 Basel (CH)
(74) Representative: SYNGENTA IP
(86) International application number: PCT/EP2013/050922
(87) International publication number: WO 2013/110553

(56) References cited:
- EP-A2- 1 656 831
- WO-A1-01/50861
- WO-A1-01/51432
- WO-A1-2008/037379
- WO-A1-2009/137096
- WO-A2-2006/060612
- US-A- 3 626 011
- US-A1- 2002 035 052

## Description

The present invention relates generally to adjuvants for agrochemicals. In particular, the present invention relates to the use of certain terpenic alkoxylates as adjuvants to improve the performance of agrochemicals and to agrochemical compositions containing such adjuvants.

The present invention provides mixtures comprising certain terpenic alkoxylate adjuvants A and an agrochemical component B. Component B is an agrochemical active ingredient. Suitable agrochemical active ingredients include insecticides, acaricides, nematocides, molluscicides, fungicides, herbicides, plant growth regulators as well as fertilizers and micronutrients.

It has now been found, surprisingly, that the agrochemical active ingredient - adjuvant mixture according to the invention can extend the range of action of the agrochemical active ingredient e.g. by achieving a synergistic effect. Thus, the rates of application of the components are lowered whilst the action remains equally good. Secondly, the active ingredient mixture still achieves a high degree of pest or weed control, sometimes even where the two individual components have become totally ineffective in such a low application rate range. This allows increased safety in use or any other advantages familiar to a person skilled in the art.

Accordingly, the present invention applies an adjuvant composition comprising at least one terpenic alkoxylate A and at least one agrochemical active ingredient B. When used herein, the term "terpenic" in the context of the terpenic alkoxylate component is indicative of a moiety having terpenic origin. In a further embodiment, the adjuvant composition of the invention may also contain water and/or one or more organic diluents such alkyl alcohols and/or glycols.

The present invention provides a method of using of the above described adjuvant composition to enhance plant growth in plant growth media by contacting the plants, parts of plants, seeds, their locus of growth or the plant growth media with an effective amount of said adjuvant composition.

In another aspect of the present invention, there is provided a method of enhancing the bio-efficacy or bio-availability of at least one agrochemical B said method comprising applying the agrochemical to plants, parts of plants, seeds, or at their locus of growth in any desired sequence, including simultaneously, separately, or in succession with a terpenic alkoxylate component according to the present invention in an amount effective to enhance bio-efficacy or bio-availability of said at least one agrochemical.

In the practice of the invention, the terpenic alkoxylate component of the invention can be applied as a concentrate or by dispersing the concentrate according to the present invention in water for use as a diluted aqueous end-use formulation.

The inventive adjuvant composition may be applied directly or with dilution in water alone or in combination with agrochemical materials such as insecticides, acaricides, nematocides, molluscicides, fungicides, herbicides, plant growth regulators as well as fertilizers and micronutrients.

The various aspects of the present invention mentioned above, as well as many other aspects of the invention are described in greater detail below.

Accordingly, in one embodiment, the at least one terpenic alkoxylate is selected from a compound of the formulae (IId) according to claim 1.

By hydroformulation of β-pinene it is obtained the Nopol alkoxylate of the formula (IId) 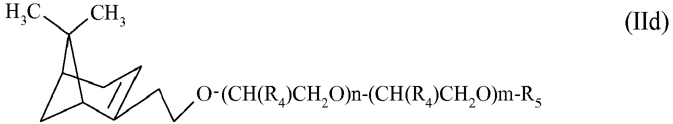 wherein R₄, R₅, m and n are as defined above. In a more specific embodiment, the terpenic alkoxylate (b) is Nopol-(POₙ-EOₘ)-H, where Nopol is the hydroformylation product of β-pinene, and wherein n=5 and m=7.

Suitable terpenic alkoxylates (b) for use in the adjuvant composition of the present invention generally are known from the literature or may be prepared by processes known from the literature and are also commercially available, for example, under the RHODOCLEAN^{®} family of terpenic alkoxylates (Rhodia).

WO2008037379 discloses adjuvants that in composition with agrochemical agents provide an improvement of the root-up-take of the active ingredients through the soil. The adjuvants are able to improve the stability of the compositions. In some cases synergism can be observed. Alkoxylated terpenes are within the preferred surfactants and in particular Rhodoclean® MSC, an alkoxylated nopol derivative. The application of the composition is here only via soil-drench.

The components B are known, e.g. from "The Pesticide Manual", Fifteenth Edition, Edited by Clive Tomlin, British Crop Protection Council.

The combinations according to the invention may also comprise more than one of the active components B, if, for example, a broadening of the spectrum of pest control is desired. For instance, it may be advantageous in the agricultural practice to combine two or three components B with a terpenic alkoxylate. The mixtures of the invention may also comprise other active ingredients in addition to a terpenic alkoxylate and component B.

Suitably, component B is a herbicide such as pinoxaden or fluazifop P butyl, or is also selected from:
1,2,4-triazin-5-ones such as metamitron and metribuzin
dimethylpyrazoles such as benzofenap, pyrazolynate (pyrazolate) and pyrazoxyfen. acylanilides such as propanil
amide herbicides such as benfluamid, bromobutide, carbetamide, flufenacet, isoxaben, naproanilide, napropamide, naptalam, propyzamide and tebutam
amino acids and salts and esters thereof, such as bialaphos and salts and esters thereof, glufosinate salts and esters thereof, glyphosate and salts and esters thereof, and sulfosate. aryloxypropionates, including the optically active isomers thereof, such as clodinafoppropargyl, cyhalofop-butyl, diclofop & esters thereof e.g. methyl ester, fenoxaprop & esters thereof eg ethyl ester, fluazifop-butyl, haloxyfop and esters thereof, propaquizafop, quizalofop and esters thereof and quizalofop-p-tefuryl
arylanilides such as diflufenican, flamprop, flamprop-M and esters thereof
arylureas such as chlorbromuron, chlorotoluron, daimuron (dymron), dimefuron, diuron, fenuron, fluometuron, isoproturon, isouron, linuron, methabenzthiazuron, methyldymron, metobromuron, metoxuron, monolinuron, neburon and tebuthiuron
benzo-2,1,3-thiadiazin-4-one-dioxides such as bentazone
benzoic acids such as 2,3,6-trichlorobenzoic acid, chloramben and dicamba
bipyridyliums such as diquat and salts thereof, and paraquat and salts thereof.
carbamates such as chlorpropham and propham, and phenylcarbamoyloxyphenyl carbamates such as desmedipham and phenmedipham
acetamides such as acetochlor, alachlor, butachlor, dimethachlor, dimethenamid and isomers thereof, metazachlor, metolachlor and isomers thereof, pretilachlor, propachlor, propisochlor and thenylchlor.
cyclohexanediones such as alloxydim and salts thereof, butroxydim, clethodim, cycloxydim, sethoxydim, tepraloxydim and tralkoxydim.
dihalobenzonitriles such as dichlobenil
dinitrophenols such as dinoterb and dintro ortho-cresol (DNOC)
diphenyl ethers such as aciflurofen and salts and esters thereof, aclonifen, bifenox, chlomethoxyfen, chlornitrofen, fluroglycofen or salts or ester thereof, fomesafen, lactofen and oxyfluorfen.
dinitroanilines such as dinitramine, ethalfluralin, fluchloralin, oryzalin, pendimethalin, prodiamine and trifluralin.
haloalkanoic herbicides such as dalapon and trichloroacetic acid and salts thereof.
hydroxybenzonitrile (HBN) herbicides such as bromoxynil and ioxynil, and HBN precursors such as bromofenoxim
hormone herbicides such as 2,4,5-trichlorophenoxyacetic acid, 2,4-dichlorophenoxyacetic acid, 2,4-dichlorophenoxybutyric acid, clopyralid, dichlorprop & dichlorprop-p, fluroxypyr, 4-chloro-2-methoxyacetic acid (MCPA), MCPA-thioethyl, 4-(4-chloro-2-methylphenoxy)butyric acid (MCPB), mecoprop & mecoprop-p, picloram, thiazopyr and triclopyr.
imidazolinones such as imazapic, imazamox, imazamethabenz-methyl, imazapyr & isopropylammonium salts thereof, imazaquin and imazethapyr.
methyl isothiocyanate precursors such as dazomet.
miscellaneous herbicides such as ammonium sulfamate, asulam, azafenidin, benazolin, benzobicyclon/benbiclon, cinmethylin, clomazone, difenzoquat & salts thereof eg methyl sulphate salt, diflufenzopyr-sodium (SAN-835H), dimethipin, dimexyflam, diphenamid, dithiopyr, epoprodan, ethofumesate, etobenzanid, fluazolate, fentrazamide, flucarbazone, flumiclorac-pentyl, flumioxazin, flupoxam, flurenol-butyl, flurochloridone, flurtamone, fluthiacet-methyl, hexazinone, mefenacet, oxadiazon, oxaziclomefone, pentoxazone, pyraflufen-ethyl, pyridatol/pyridafol, pyridate, isoxachlortole, isoxaflutole and sodium chlorate.
organoarsenical herbicides such as disodium methylarsonate (DSMA) and monosodium methylarsonate (MSMA)
organophosphorus herbicides such as anilofos and fosamine-sodium
phosphorothioates such as butamifos, bensulide and piperophos
pyridazinones such as chloridazon and norflurazon
pyridones such as fluridone
pyrimidinyloxybenzoic acids and salts and esters thereof, such as pyrithiobac-sodium, bispyribac-sodium, pyriminobac-methyl and pyribenzoxim.
quinolinecarboxylic acids such as quimerac and quinclorac
herbicide antidotes such as benoxacor, cloquintocet-mexyl, dichlormid, fenchlorazole-ethyl, fenclorim, fluxofenim, furilazole, naphthalic anhydride, oxabentrinil, mefenpyr-diethyl, N-(dichloroacetyl)-1 -oxa-4-azaspirobicyclo-(4,5)-decane (AD-67), 3-dichloroacetyl-2,2,5-trimethyloxazolidine (R-29148) and 2-dichloromethyl-2-methyl-1,3-dioxolane (MG-191).
sulfamoylureas such as cyclosulfamuron.
sulfonanilides such as chloransulam-methyl, diclosulam, florasulam, flumetsulam and metosulam.
sulfonylureas such as amidosulfuron, azimsulfuron, bensulfuron and esters thereof, chlorimuron & esters eg ethyl ester thereof, chlorsulfuron, cinosulfuron, ethametsulfuronmethyl, flazasulfuron, flupyrsulfuron and salts thereof, halosulfuron-methyl, ethoxysulfuron, imazosulfuron, iodosulfuron, metsulfuron and esters thereof, nicosulfuron, oxasulfuron, primisulfuron & esters eg methyl ester thereof, prosulfuron, pyrazosulfuron-ethyl, rimsulfuron, sulfometuron-methyl, sulfosulfuron, thifensulfuron-methyl, triasulfuron, tribenuron, tribenuron-methyl and triflusulfuron-methyl
thiocarbamates such as butylate, cycloate, dimepiperate, S-ethyl dipropylthiocarbamate (EPTC), esprocarb, molinate, orbencarb, pebulate, prosulfocarb, thiobencarb, tiocarbazil, triallate and vemolate.
triazine herbicides such as ametryn, atrazine, cyanazine, dimethametryn, prometon, prometryn, propazine, simazine, simetryn, terbuthylazine, terbutryn and trietazine.
triazole herbicides such as amitrole.
triazolinones such as carfentrazone-ethyl and sulfentrazone.
triketones such as sulcotrione and mesotrione.
uracils such as bromacil, lenacil and terbacil.

In one embodiment, component B is a fungicidal compound such as (E)-N-methyl-2-[2-(2,5-dimethylphenoxymethyl)phenyl]-2-methoxy-iminoacetamide (SSF-129), 4-bromo-2-cyano-N,N-dimethyl-6-trifluoromethylbenzimidazole-1 -sulfonamide, α -[N-(3-chloro-2,6-xylyl)-2-methoxyacetamido]-γ-butyrolactone, 4-chloro-2-cyano-N,N-dimethyl-5-p-tolylimidazole-1-sulfonamide (IKF-916, cyamidazosulfamid), 3-5-dichloro-N-(3-chloro-1-ethyl-1-methyl-2-oxopropyl)-4-methylbenzamide (RH-7281, zoxamide), N-allyl-4,5,-dimethyl-2-trimethylsilylthiophene-3-carboxamide (MON65500), N-(1-cyano-1,2-dimethylpropyl)-2-(2,4-dichlorophenoxy)propionamide (AC382042), N-(2-methoxy-5-pyridyl)-cyclopropane carboxamide, N-[(1RS,4SR)-9-(Dichloromethylidene)-1,2,3,4-tetrahydro-1,4-methanonaphthalen-5-yl]-3-(difluoromethyl)-1-methyl-1H-pyrazole-4-carboxamide, acibenzolar (CGA245704), alanycarb, aldimorph, anilazine, azaconazole, azoxystrobin, benalaxyl, benomyl, biloxazol, bixafen, bitertanol, blasticidin S, boscalid, bromuconazole, bupirimate, butylamine, captafol, captan, carbendazim, carbendazim chlorhydrate, carboxin, carpropamid, carvone, CGA41396, CGA41397, chinomethionate, chloraniformethan, chlorothalonil, chlorozolinate, clozylacon, copper containing compounds such as copper oxychloride, copper oxyquinolate, copper sulfate, copper tallate and Bordeaux mixture, cyflufenamid, cymoxanil, cyproconazole, cyprodinil, debacarb, di-2-pyridyl disulfide 1,1'-dioxide, dichlofluanid, diclocymet, diclomezine, dicloran, diethofencarb, difenoconazole, difenzoquat, diflumetorim, O,O-di-iso-propyl-S-benzyl thiophosphate, dimefluazole, dimetconazole, dimethomorph, dimethirimol, diniconazole, dinocap, dithianon, dodecyl dimethyl ammonium chloride, dodemorph, dodicin, dodine, doguadine, edifenphos, epoxiconazole, ethamoxam, ethirimol, ethyl-(Z)-N-benzyl-N-([methyl(methyl-thioethylideneaminooxycarbonyl)amino]thio)-β -alaninate, etridiazole, famoxadone, fenamidone (RPA407213), fenarimol, fenbuconazole, fenfuram, fenhexamid (KBR2738), fenoxanil, fenpiclonil, fenpropidin, fenpropimorph, fentin acetate, fentin hydroxide, ferbam, ferimzone, fluazinam, fludioxonil, flumetover, fluoroimide, fluquinconazole, flusilazole, flutolanil, flutriafol, fluxapyroxad, folpet, fuberidazole, furalaxyl, furametpyr, furfural, guazatine, hexaconazole, hydroxyisoxazole, hymexazole, imazalil, imibenconazole, iminoctadine, iminoctadine triacetate, ipconazole, iprobenfos, iprodione, iprovalicarb (SZX0722), isopropanyl butyl carbamate, isoprothiolane, isopyrazam, isotianil, kasugamycin, kresoxim-methyl, leptomycin, LY186054, LY211795, LY248908, mancozeb, mandipropamid, maneb, mefenoxam, mepanipyrim, mepronil, metalaxyl, metconazole, metiram, metiram-zinc, metominostrobin, metsulfovax, myclobutanil, neoasozin, nickel dimethyldithiocarbamate, nitrothal-isopropyl, nuarimol, OCH, ofurace, organomercury compounds, oxadixyl, oxasulfuron, oxolinic acid, oxpoconazole, oxycarboxin, pefurazoate, penconazole, pencycuron, penthiopyrad, phenazin oxide, phosetyl-Al, phosphorus acids, phthalide, picoxystrobin (ZA1963), polyoxin D, polyram, probenazole, prochloraz, procymidone, propamocarb, propiconazole, propineb, propionic acid, prothiaconazole, pyrazophos, pyrifenox, pyrimethanil, pyroquilon, pyroxyfur, pyrrolnitrin, quaternary ammonium compounds, quinazamid, quinomethionate, quinoxyfen, quintozene, silthiofam, sipconazole (F-155), sodium pentachlorophenate, spiroxamine, streptomycin, sulfur, tebuconazole, tecloftalam, tecnazene, tetraconazole, thiabendazole, thifluzamid, 2-(thiocyanomethylthio)benzothiazole, thiophanate-methyl, thiram, timibenconazole, tolclofos-methyl, tolylfluanid, triadimefon, triadimenol, triazbutil, triazoxide, tricyclazole, tricyclic amine derivatives as disclosed in WO 07/48556, tridemorph, trifloxystrobin (CGA279202), triforine, triflumizole, triticonazole, validamycin A, valifenalate, vapam, vinclozolin, xiwojunan, zineb and ziram.

In another embodiment, component B is an insecticides including:
a) a pyrethroid selected from the group consisting of permethrin, cypermethrin, fenvalerate, esfenvalerate, deltamethrin, cyhalothrin, lambda-cyhalothrin, gamma-cyhalothrin, bifenthrin, fenpropathrin, cyfluthrin, tefluthrin, ethofenprox, natural pyrethrin, tetramethrin, S-bioallethrin, fenfluthrin, prallethrin and 5-benzyl-3-furylmethyl-(E)-(1R,3S)-2,2-dimethyl-3 -(2-oxothio lan-3 -ylidenemethyl)cyclopropane carboxylate;
b) an organophosphate selected from the group consisting of acephate, profenofos, triazophos, methamidophos, dimethoate, chlorpyrifos, pirimiphos-methyl, pirimiphos-ethyl, fenitrothion, fosthiazate;
c) a carbamate selected from the group consisting of pirimicarb, triazamate, carbosulfan, bendiocarb, fenobucarb, propoxur, methomyl and oxamyl;
d) a benzoyl urea selected from the group consisting of hexaflumuron, flufenoxuron, lufenuron and chlorfluazuron;
   an organic tin compound selected from the group consisting of cyhexatin, fenbutatin oxide and azocyclotin;
f) a pyrazole selected from the group consisting of tebufenpyrad and fenpyroximate;
g) a macrolide selected from the group consisting of abamectin, emamectin (e.g. emamectin benzoate), ivermectin, milbemycin, spinosad, azadirachtin and spinetoram;
h) an organochlorine compound selected from the group consisting of endosulfan (in particular alpha-endosulfan),
j) a fumigant agent selected from the group consisting of chloropicrin, dichloropropane, methyl bromide and metam;
k) a neonicotinoid compound selected from the group consisting of imidacloprid, thiacloprid, acetamiprid, nitenpyram, dinotefuran, thiamethoxam, clothianidin, nithiazine and flonicamid;
1) a diacylhydrazine selected from the group consisting of tebufenozide, chromafenozide and methoxyfenozide;
m) a diphenyl ether selected from the group consisting of pyriproxyfen;
n) indoxacarb;
o) chlorfenapyr;
p) pymetrozine;
q) spirotetramat, spirodiclofen and spiromesifen;
r) a diamide selected from the group consisting of flubendiamide, chlorantraniliprole (Rynaxypyr®) and cyantraniliprole;
s) sulfoxaflor;
t) metaflumizone;
u) fipronil and ethiprole;
v) pyrifluqinazon; and
w) buprofezin

In one embodiment of the invention component B is a compound selected from a neonicotinoid compound selected from the group consisting of imidacloprid, thiacloprid, acetamiprid, nitenpyram, dinotefuran, thiamethoxam, clothianidin, nithiazine and flonicamid.

Plant growth regulators Examples of suitable plant growth regulators that may be used as a further active ingredient in the mixture of the invention may be any compound selected from ancymidol, chlormequat chloride, ethephon, flumetralin, flurprimidol, gibberellic acid, gibberellin A4/gibberellin A7, maleic hydrazide, mepiquat chloride, paclobutrazol, prohexadione calcium, thiadiazuron, trinexapac ethyl and uniconazole.

The adjuvant composition of the present invention may further contain other inert additives such as standard formulation components and diluents. Such inert additives include flow enhancers, other wetting agents, antifoaming agents, biocides, drift control agents, deposition enhancers, adjuvants, evaporation retardants, freeze protecting agents, UV protecting agents, fragrances, and the like.

In addition, adjuvant composition according to the invention may be applied with other horticultural components for lawn, garden, or other vegetation treatment, including, further wetting agents, colorants (for aesthetic purposes or for application identification), perfumes, water, electrolytes, fertilizer, growth hormones, minerals, spray pattern indicators and the like. Suitably, application to plants, parts of plants, seeds, or at their locus of growth may be made in any desired sequence, including simultaneously, separately, or in succession, and soil or foliar applied.

According to the invention "useful plants" typically comprise the following species of plants: grape vines; cereals, such as wheat, barley, rye or oats; beet, such as sugar beet or fodder beet; fruits, such as pomes, stone fruits or soft fruits, for example apples, pears, plums, peaches, almonds, cherries, strawberries, raspberries or blackberries; leguminous plants, such as beans, lentils, peas or soybeans; oil plants, such as rape, mustard, poppy, olives, sunflowers, coconut, castor oil plants, cocoa beans or groundnuts; cucumber plants, such as marrows, cucumbers or melons; fibre plants, such as cotton, flax, hemp or jute; citrus fruit, such as oranges, lemons, grapefruit or mandarins; vegetables, such as spinach, lettuce, asparagus, cabbages, carrots, onions, tomatoes, potatoes, cucurbits or paprika; lauraceae, such as avocados, cinnamon or camphor; maize; tobacco; nuts; coffee; sugar cane; tea; vines; hops; durian; bananas; natural rubber plants; turf or ornamentals, such as flowers, shrubs, broad-leaved trees or evergreens, for example conifers. This list does not represent any limitation and is to be understood as including also useful plants which have been so transformed by the use of recombinant DNA techniques

In one embodiment, the adjuvant of the invention is well tolerated by all major turf species various turf grasses including the cool-season turf grasses (at seeding or to established annual ryegrass, fine fescue, Kentucky bluegrass, perennial ryegrass, tall fescue) and warm-season turf grasses (centipede, hybrid bermudagrass, and St. Augustinegrass. There may also be mentioned common bermuda and zoysiagrass).

In general, the formulations include from 0.01 to 90% by weight of active agent, from 0 to 20% agriculturally acceptable surfactant and 10 to 99.99% solid or liquid formulation inerts and adjuvant(s), the active agent consisting of at least the terpenic alkoxylate A together with a compound of component B, and optionally other active agents, particularly microbiocides or conservatives or the like. Concentrated forms of compositions generally contain in between about 2 and 80%, preferably between about 5 and 70% by weight of active agent. Application forms of formulation may for example contain from 0.01 to 20% by weight, preferably from 0.01 to 5% by weight of active agent. Whereas commercial products will preferably be formulated as concentrates, the end user will normally employ diluted formulations.

In one embodiment, the adjuvant component A of the invention is applied in an effective amount which is typically at a rate of 20 1/ha in a water volume of 200-1000 litres per hectare using conventional spray equipment.

### EXAMPLES

The following examples are provided for illustration purposes and should not be considered as limiting the scope of the invention.

In general, active ingredient is formulated (SC, SL) and just before spraying the formulations are mixed with water and ultrasonically agitated in order to achieve homogeneous distribution. Spray solutions are made up in water. Adjuvants are added as tank mix to the spray solution just before application. Foliar application is at 200 L/ha in an application device spraying with a single nozzle (type Lechler) 60 cm above the plants. Preventative tests are performed as 1 or 2 day preventative applications, i.e. plants are treated with the compounds 1 or 2 days prior to artificial inoculation with fungal spores, whereas for curative tests the inoculation is carried out prior to application. A single evaluation of disease level is made 5 to 48 days after inoculation, depending on the pathosystem. Disease control relative to the untreated check plants is then calculated. In the following examples, all treatments were sprayed at 2001/ha spray volume in 10% isopropanol solution to normalise foliar retention: Azoxystrobin; - Quadris SC250, Isopyrazam; - SC250, Cyproconazole: - Alto SL100, Chlorothalonil; Bravo SC720

### Detailed Method Descriptions

Alternaria solani / tomato / preventative (Alternaria on tomato) -> ALTELYP/ff-pr-S: 4-week old tomato plants cv. Roter Gnom are sprayed in a spray chamber with the formulated test compound diluted in water. The test plants are inoculated by spraying them with a spore suspension two days after application. The inoculated test plants are incubated at 22/18 °C (day/night) and 95% rh in a greenhouse and the percentage leaf area covered by disease is assessed when an appropriate level of disease appears on untreated check plants (5 - 7 days after application).

Mycosphaerella graminicola (Septoria tritici) / wheat / preventative (Septoria tritici leaf spot on wheat) -> SEPTTRZ/ff-pr-S: 2-week old wheat plants cv. Riband are sprayed in a spray chamber with the formulated test compound diluted in water. The test plants are inoculated by spraying a spore suspension on them one day after application. After an incubation period of 1 day at 22°C/21 °C (day/night) and 95% rh, the inoculated test plants are kept at 22°C/21 °C (day/night) and 70% rh in a greenhouse. Percentage leaf area covered by disease was assessed and efficacy was calculated compare to untreated controls when an appropriate level of disease appears on untreated check plants (16 - 19 days after application).

Puccinia recondita f. sp. tritici / wheat / preventative (Brown rust on wheat) -> PUCCTRZ/ff-pr-S: 2-week old wheat plants cv. Arina are sprayed in a spray chamber with the formulated test compound diluted in water. The test plants are inoculated by spraying them with a spore suspension one day after application. After an incubation period of 1 day at 20° C and 95% rh, the inoculated test plants are kept at 20° C / 18° C (day/night) and 60% rh in a greenhouse. The percentage leaf area covered by disease is assessed when an appropriate level of disease appears on untreated check plants (12 - 14 days after application).

Puccinia recondita f. sp. tritici / wheat / curative (Brown rust on wheat) -> PUCCTRZ/ff-cu-S: 2-week old wheat plants cv. Arina are inoculated by spraying them with a spore suspension two days before application. After an incubation period of 1 day at 20o C and 95% rh followed by 1 day at 20o C and 60% rh in a greenhouse, the inoculated test plants are sprayed in a spray chamber with the formulated test compound diluted in water. After additional incubation at 20 °C/18 °C / 18oC (day/night) and 60% rh in a greenhouse, the percentage leaf area covered by disease is assessed when an appropriate level of disease appears on untreated check plants (9 - 12 days after application).

### Examples 1 - 6 - Azoxystrobin

Results for Puccinia preventative test (pr-column) and Puccinia curative test (cucolumn) on wheat. Visual assessments of control; average of three replicates per treatment. Nimbus commercial adjuvant and methyl oleate are standard adjuvants for comparison.

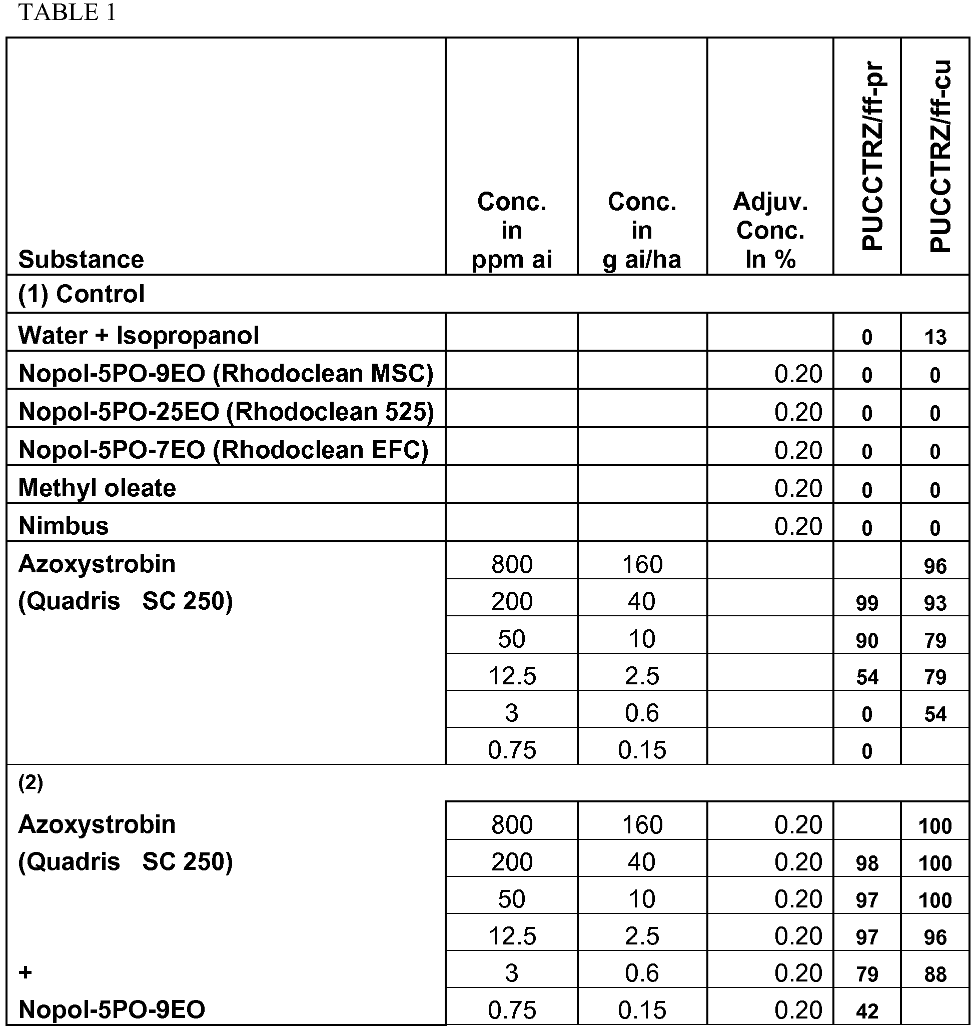

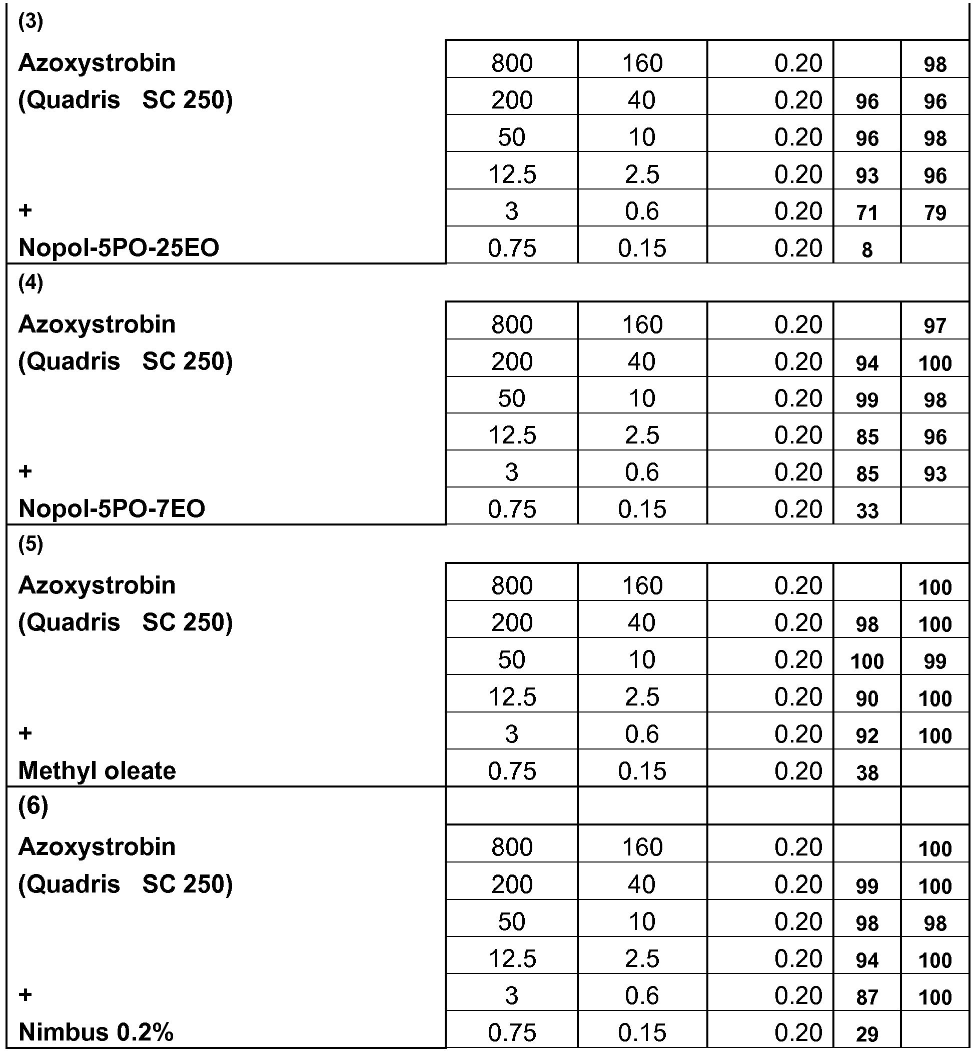

### Examples 7 - 12 - Isopyrazam

Results for Puccinia preventative test and Puccinia curative test on wheat. Visual assessments of control; average of three replicates per treatment. Nimbus commercial adjuvant and methyl oleate are standard adjuvants for comparison.

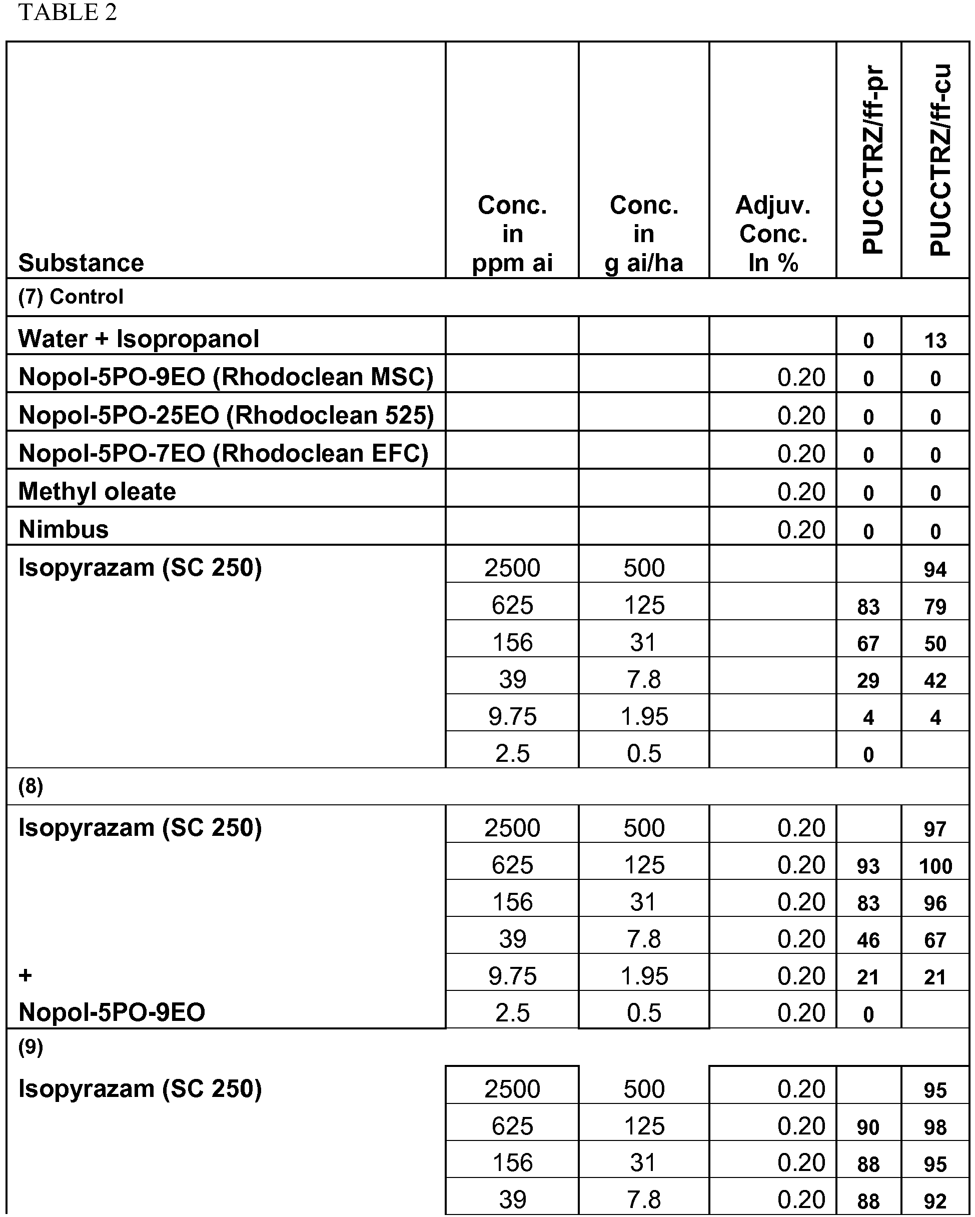

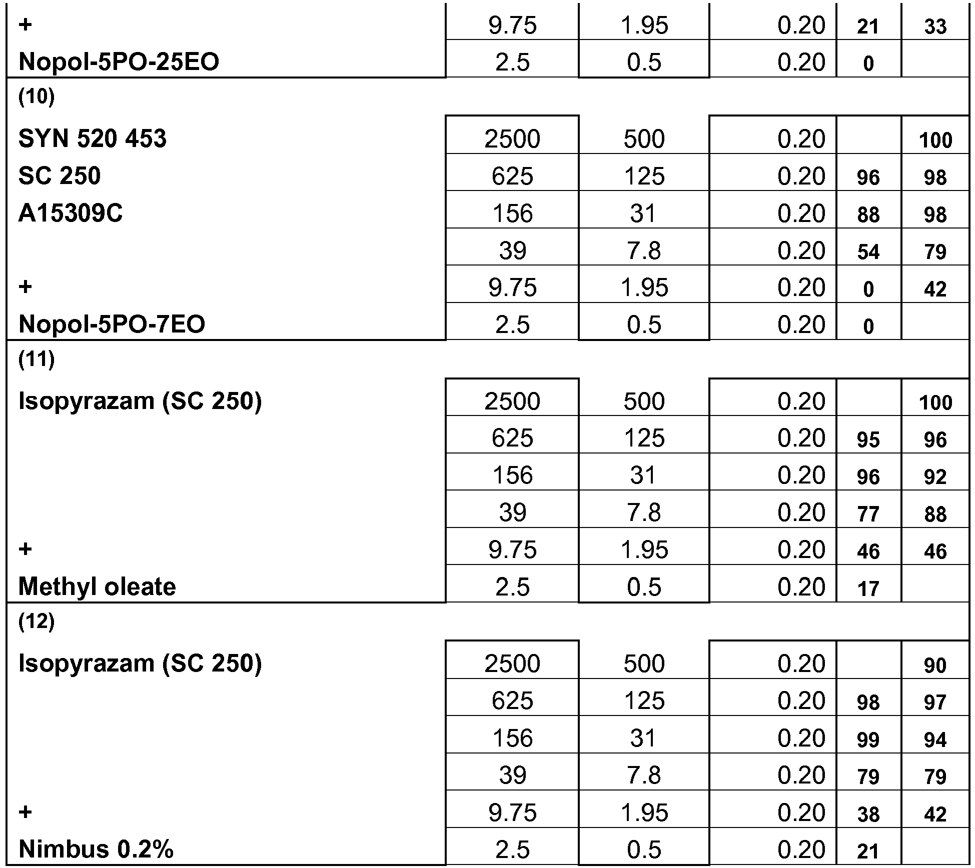

### Examples 13 - 18 - Cyproconazole

Results for Septoria preventative test and Puccinia preventative test on wheat. Visual assessments of control; average of three replicates per treatment. Nimbus commercial adjuvant and methyl oleate are standard adjuvants for comparison.

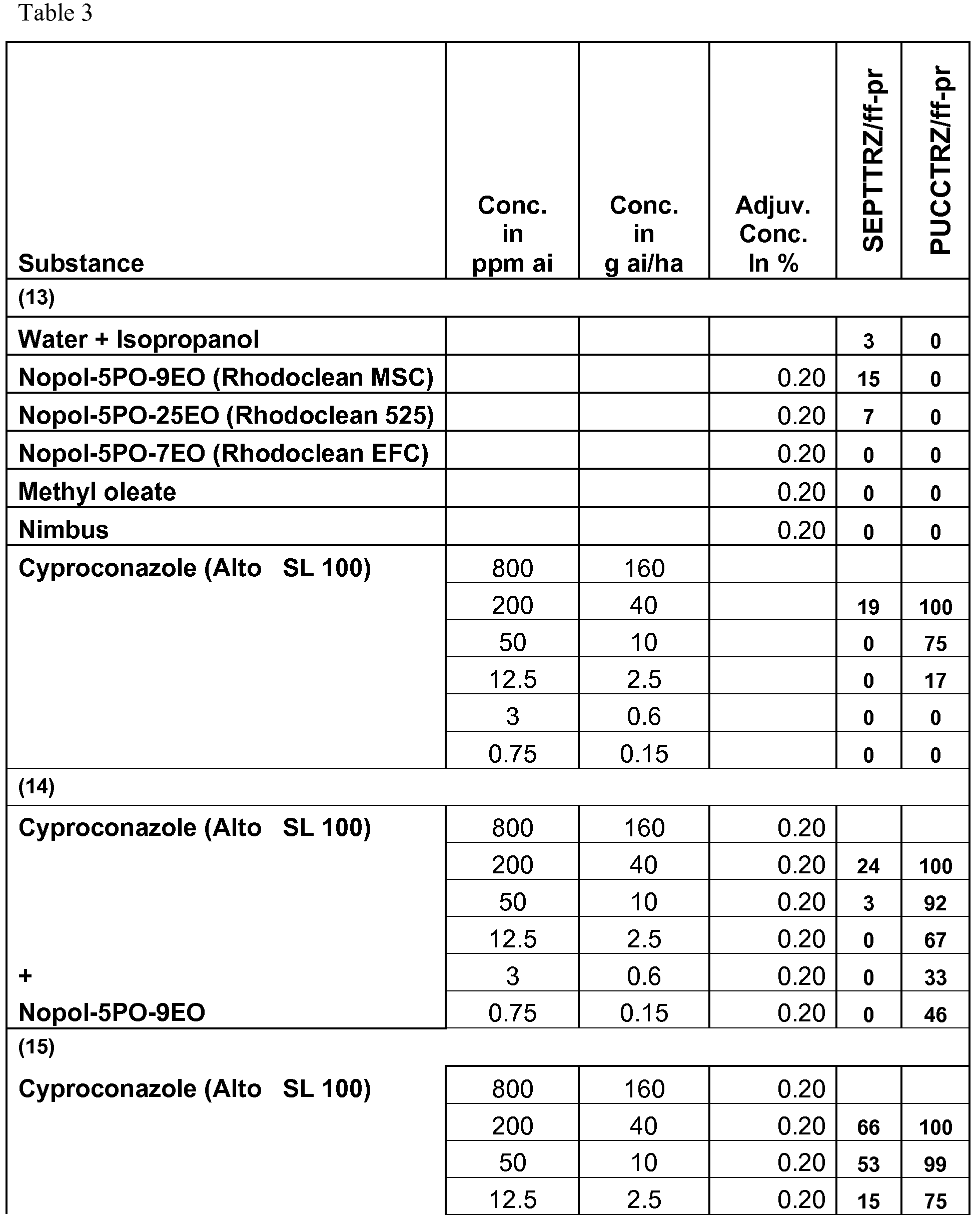

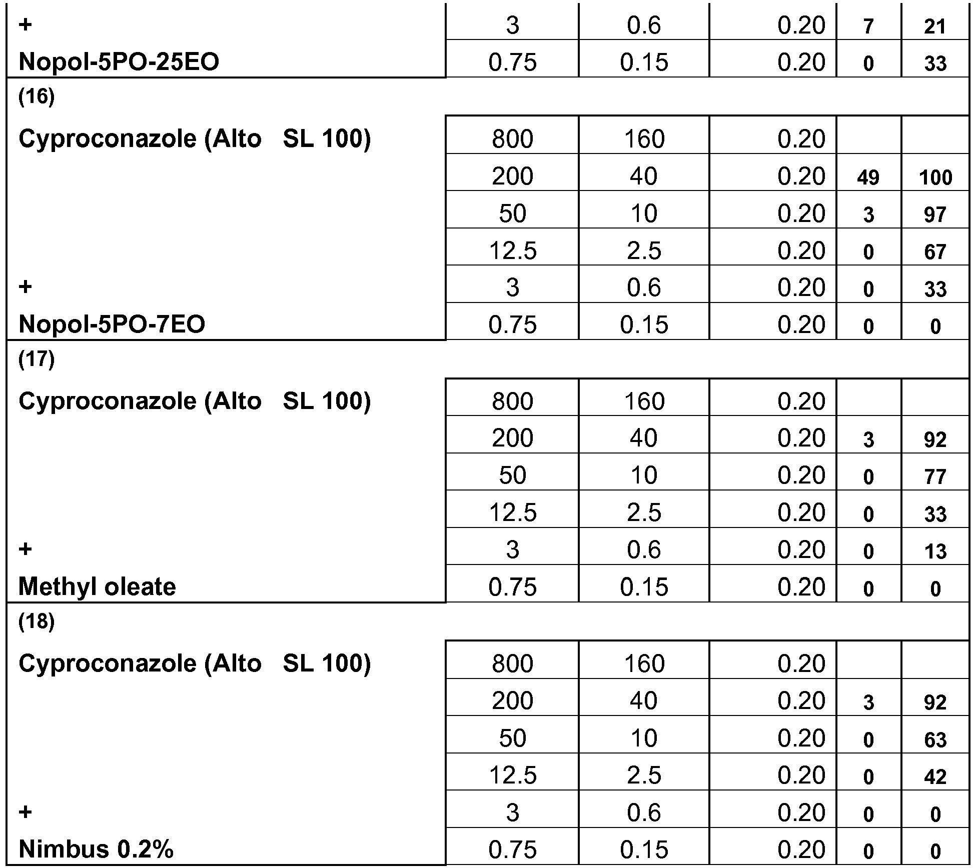

### Examples 19 - 24 - Chlorothalonil

Results for Altenaria preventative test and Puccinia preventative test on wheat. Visual assessments of control; average of three replicates per treatment. Nimbus commercial adjuvant and methyl oleate are standard adjuvants for comparison.

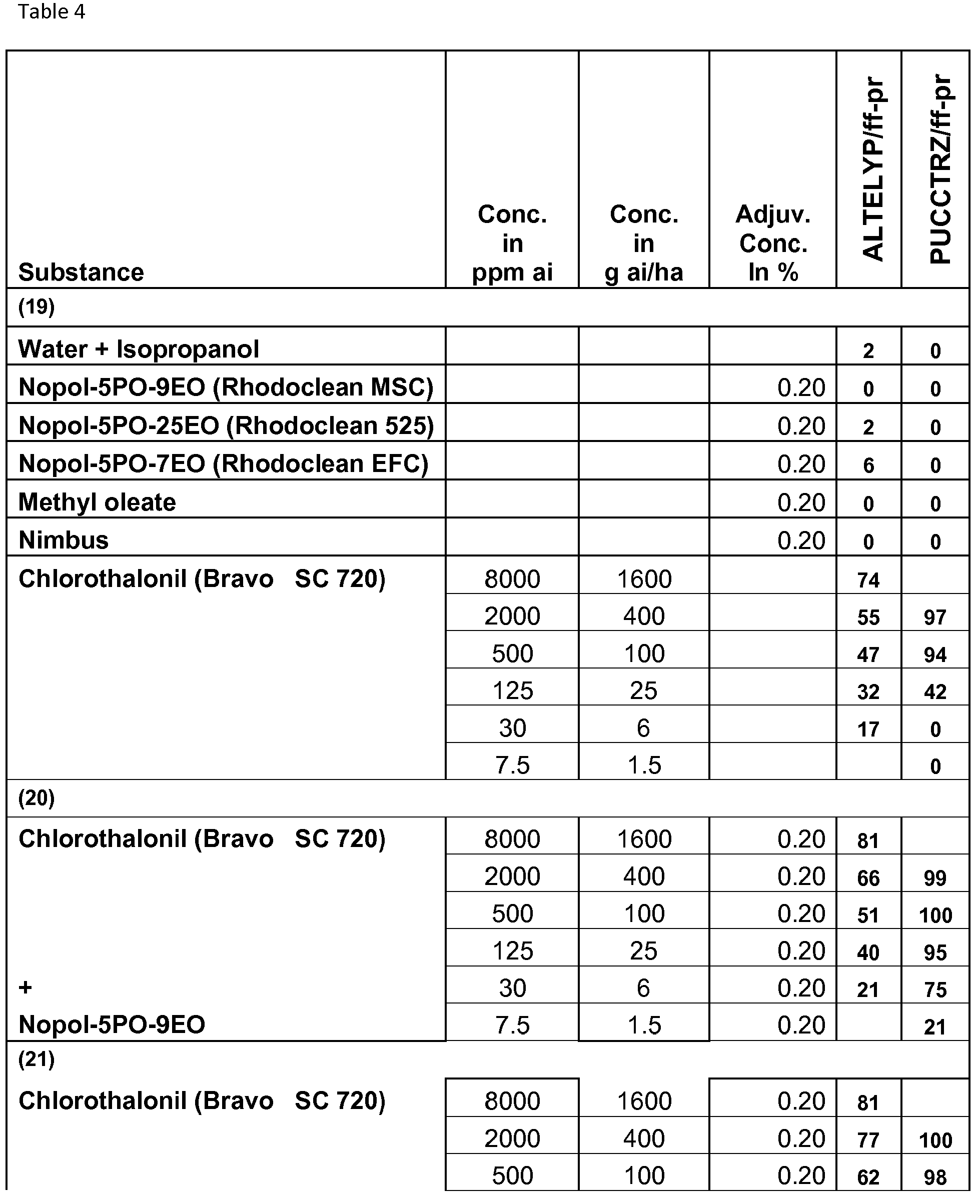

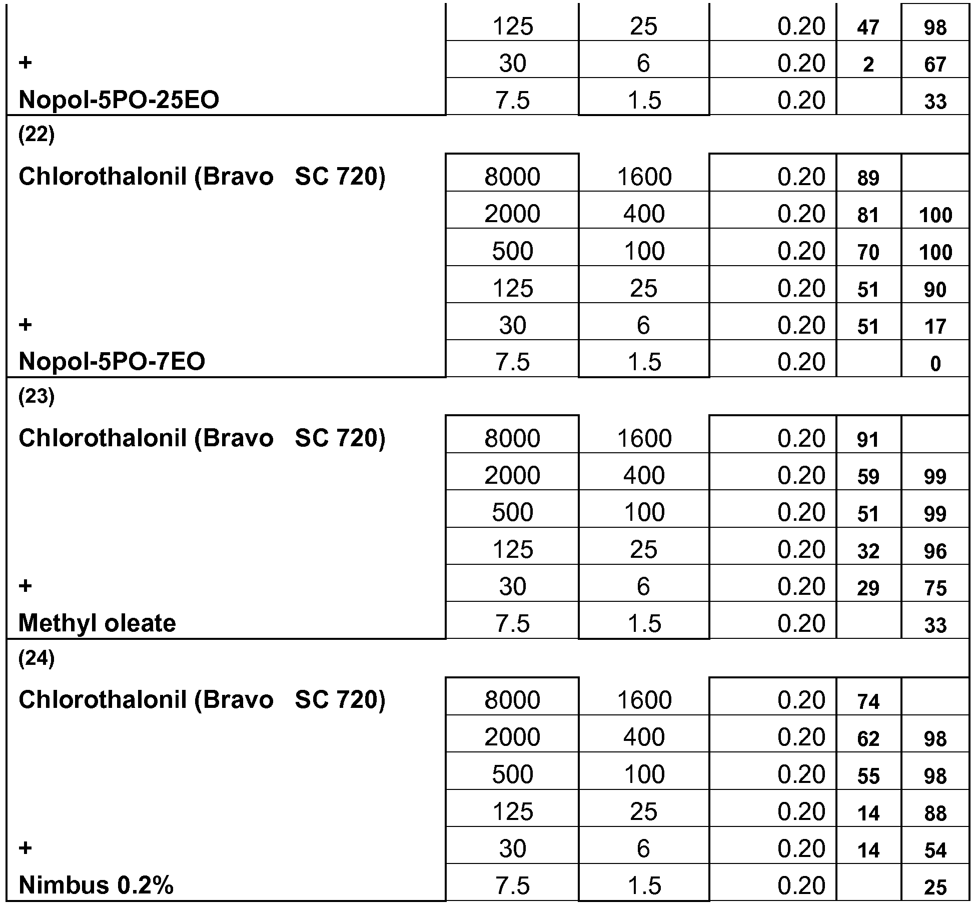

The foregoing description and example are for the purpose of illustration only and does not limit the scope of protection which should be accorded this invention.

## Claims

1. A method of enhancing the bio-efficacy or bio-availability of at least one agrochemical said method comprising foliar applying the agrochemical to plants or parts of plants in any desired sequence, including simultaneously, separately, or in succession with a terpenic alkoxylate adjuvant of formula (IId) 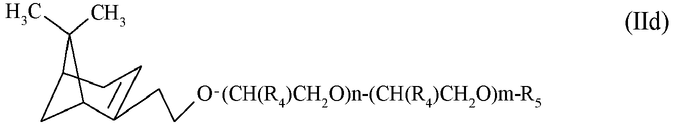 each R₄ is independently selected from hydrogen and methyl; R₅ is selected from hydrogen and linear or branched C₁-C₈ alkyl; and where n and m are each other than zero and the sum of n and m is chosen so that there are from 2 to 10 propylene oxide units and from 5 to 25 ethylene oxide units in an amount effective to enhance the bio-efficacy or bio-availability of said at least one agrochemical.

2. A method as claimed in claim 1, wherein the agrochemical is selected from a pesticide, a growth regulator and a fertilizer.

3. A method as claimed in claim 2, wherein the agrochemical is selected from pinoxaden, fluazifop-P-butyl, azoxystrobin, thiamethoxam, isopyrazam and trinexapac-ethy l.

## Patentansprüche

1. Verfahren zur Verbesserung der biologischen Wirksamkeit oder biologischen Verfügbarkeit mindestens einer Agrochemikalie, wobei das Verfahren die Blattanwendung der Agrochemikalie auf Pflanzen oder Pflanzenteile in beliebiger gewünschter Reihenfolge gleichzeitig, getrennt oder aufeinanderfolgend mit einem Terpenalkoxylatadjuvans der Formel (IId) 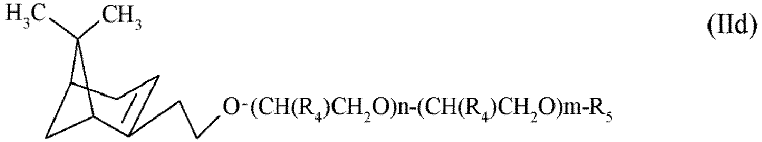 umfasst, wobei R₄ jeweils unabhängig aus Wasserstoff und Methyl ausgewählt ist, R₅ aus Wasserstoff und geradkettigem oder verzweigtem C₁-C₈-Alkyl ausgewählt ist und wobei n und m jeweils von null verschieden sind und die Summe von n und m so gewählt ist, dass 2 bis 10 Propylenoxideinheiten und 5 bis 25 Ethylenoxideinheiten vorliegen, in einer Menge, die die biologische Wirksamkeit bzw. biologische Verfügbarkeit der mindestens einen Agrochemikalie verbessert.

2. Verfahren nach Anspruch 1, wobei die Agrochemikalie aus einem Pestizid, einem Wachstumsregulator und einem Düngemittel ausgewählt ist.

3. Verfahren nach Anspruch 2, wobei die Agrochemikalie aus Pinoxaden, Fluazifop-P-butyl, Azoxystrobin, Thiamethoxam, Isopyrazam und Trinexapac-ethyl ausgewählt ist.

## Revendications

1. Procédé d'amélioration de la bio-efficacité ou de la bio-disponibilité d'au moins un composé agrochimique, ledit procédé comprenant l'application foliaire du composé agrochimique à des végétaux ou à des parties de végétaux selon une quelconque séquence souhaitée, y compris simultanément, séparément, ou successivement avec un adjuvant de type alcoxylate terpénique de formule (IId) 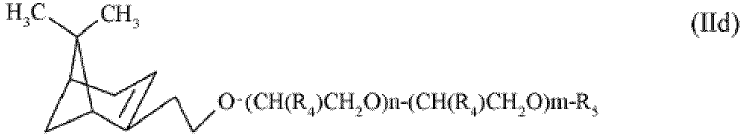 chaque R₄ étant indépendamment choisi parmi hydrogène et méthyle ; R₅ étant choisi parmi hydrogène et C₁₋₈-alkyle linéaire ou ramifié ; et où n et m sont chacun différents de zéro et la somme de n et m est choisie de telle sorte qu'il y a de 2 à 10 motifs d'oxyde de propylène et de 5 à 25 motifs d'oxyde d'éthylène en une quantité efficace pour améliorer la bio-efficacité ou la bio-disponibilité dudit au moins un composé agrochimique.

2. Procédé selon la revendication 1, le composé agrochimique étant choisi parmi un pesticide, un régulateur de croissance et un engrais.

3. Procédé selon la revendication 2, le composé agrochimique étant choisi parmi le pinoxaden, le fluazifop-P-butyl, l'azoxystrobine, le thiaméthoxam, l'isopyrazam et le trinéxapac-éthyl.
